# EUROPÄISCHE PATENTSCHRIFT

(11) **EP 3 888 158 B1**
(45) Veröffentlichungstag und Bekanntmachung des Hinweises auf die Patenterteilung: **05.04.2023**
(21) Anmeldenummer: 19804700.3
(22) Anmeldetag: 13.11.2019
(51) Int. Cl.: H01M 50/213, H01M 50/222, H01M 50/227, H01M 50/229, H01M 50/24

(54) **INTEGRIERTES KÜHLELEMENT FÜR EIN BATTERIEMODUL**
HOUSING
BOÎTIER

(30) Priorität: 28.11.2018 EP 18208973
(43) Veröffentlichungstag der Anmeldung: 06.10.2021
(73) Patentinhaber: Covestro Intellectual Property GmbH & Co. KG, 51373 Leverkusen (DE)
(72) Erfinder: KNAUPP, Matthias, 40764 Langenfeld (DE); MARSCHEWSKI, Julian, 40489 Düsseldorf (DE)
(74) Vertreter: Levpat
(86) Internationale Anmeldenummer: PCT/EP2019/081103
(87) Internationale Veröffentlichungsnummer: WO 2020/108988

(56) Entgegenhaltungen:
- EP-A1- 2 031 672
- DE-A1-102008 031 175
- DE-A1-102008 058 351
- US-A1- 2018 212 208

## Beschreibung

Die vorliegende Erfindung betrifft ein Gehäuse für wenigstens ein Wärme abgebendes Element, umfassend eine Gehäusewand, eine mit der Gehäusewand verbundene Halterung zur Aufnahme des wenigstens einen Wärme abgebenden Elements und einen Kühlkörper, welcher auf einer der Halterung gegenüberliegenden Seite der Gehäusewand angeordnet ist und mit der Gehäusewand verbunden ist. Das Wärme abgebende Element ist vorzugsweise ein Speicher für elektrische Energie. Die Erfindung betrifft ebenfalls ein Fahrzeug, vorzugsweise ein Elektrofahrzeug, mit einem solchen Gehäuse.

Beim Betrieb von Batteriemodulen, wie sie in elektrischen Fahrzeugen eingesetzt werden, können sich die Batteriemodule erwärmen. Zur Erhöhung der Lebensdauer und zur Verbesserung des Wirkungsgrades werden die Batteriemodule daher gekühlt.

Innerhalb eines Batteriemoduls werden die Batteriezellen in sogenannten Zellhaltern positioniert und fixiert. Diese können zum Beispiel aus Kunststoff gefertigt sein. Unterhalb der Zellen erfolgt die Kühlung konventionell zumeist durch einen Plattenwärmetauscher aus Aluminium. In der Regel existieren somit ein Oberteil mit den in Zellhaltern fixierten Zellen und ein Unterteil, welches die Kühlung realisiert. Die wärmeübertragende Fläche ist letztlich eine Platte. Die einzelnen Teile werden verspannt und in das Batteriegehäuse integriert.

Es existieren auch Varianten, bei welchen Zellhalter und Gehäuse aus einem Teil gefertigt sind und darunter die Kühlung konventionell mit einem Plattenwärmetauscher aus Aluminium erfolgt.

DE 10 2014 201165 A1 betrifft ein Batteriemodul mit einer Anzahl von elektrisch miteinander verschalteten Batteriezellen, wobei die einzelnen Batteriezellen durch ein Temperierfluid temperiert sind. Zwischen den Batteriezellen verläuft ein Kanalsystem, das von dem Temperierfluid durchströmt ist und das Kanalsystem ist von einem Ausgasungssystem der Batteriezellen getrennt.

DE 10 2014 221684 A1 offenbart ein Gehäuse zur Aufnahme einer Vielzahl von Batteriezellen, insbesondere Lithium-Ionen-Batteriezellen, wobei das Gehäuse, insbesondere ein Kunststoff-Gehäuse, eine Kühlungsvorrichtung mit einer Eintrittsstelle und einer Austrittsstelle für einen Luftstrom zur Kühlung der Batteriezellen umfasst. Das Gehäuse ist zusammen mit der im Gehäuse integrierten Kühlungsvorrichtung als ein einstückiges Bauteil ausgebildet, wobei die Kühlungsvorrichtung zusätzlich Abstandshalter zum Anordnen aller aufzunehmenden Batteriezellen mit einem luftleitbaren Zwischenraum zwischen den Batteriezellen aufweist, wodurch dem Luftstrom ein Luftkanal zwischen den Batteriezellen bereitgestellt wird.

Des Weiteren offenbaren US 2018/212208 A1, EP 2031672 A1 und DE 10 2008 031 175 jeweils ein Gehäuse für ein Wärme abgebendes Element,

Die vorliegende Erfindung hat sich die Aufgabe gestellt, ein Gehäuse für Wärme abgebende Elemente bereitzustellen, welches einfach zu fertigen ist.

Erfindungsgemäß gelöst wird die Aufgabe durch ein Gehäuse gemäß Anspruch 1. Ein Verfahren gemäß Anspruch 11 und ein System gemäß Anspruch 12 sind ebenfalls

Gegenstand der Erfindung. Vorteilhafte Weiterbildungen sind in den Unteransprüchen angegeben. Sie können beliebig kombiniert werden, sofern sich aus dem Kontext nicht eindeutig das Gegenteil ergibt. Im Zusammenhang mit dem Gehäuse diskutierte Ausführungsformen sind auch auf das Verfahren und das System anwendbar.

Ein Gehäuse für wenigstens ein Wärme abgebendes Element umfasst eine Gehäusewand, eine mit der Gehäusewand verbundene Halterung zur Aufnahme des wenigstens einen Wärme abgebenden Elements und einen Kühlkörper, welcher auf einer der Halterung gegenüberliegenden Seite der Gehäusewand angeordnet ist und mit der Gehäusewand verbunden ist. Die Gehäusewand, die Halterung und der Kühlkörper liegen insgesamt als einstückiges Bauteil vor. Der Kühlkörper weist wenigstens einen Kanal für ein Kühlmedium auf. Der Kühlkörper weist folglich eine an die Gehäusewand angeformte Struktur. "Auf der gegenüberliegenden Seite der Gehäusewand angeordnet", bedeutet, dass der Kühlkörper an der Außenseite des Gehäuses angeordnet ist, während die Halterung im Inneren des Gehäuses angeordnet ist. Wenigstens das Material des Kühlkörpers umfasst ein erstes thermoplastisches Polymer mit einer Wärmeleitfähigkeit, bestimmt gemäß ASTM E1461-01, von ≥ 0.2 W/(m K). Sofern in der vorliegenden Anmeldung von "Wärmeleitfähigkeit" gesprochen wird, ist immer die through-plane Wärmeleitfähigkeit gemeint. "Polymer" wird hier verstanden als "Polymer-Zusammensetzung". Es besteht somit wenigstens ein Teilbereich des Kühlkörpers aus einer thermoplastischen Zusammensetzung mit einer Wärmeleitfähigkeit, bestimmt gemäß ASTM E1461-01, von ≥ 0.2 W/(m K). Vorzugsweise besteht der gesamte Kühlkörper aus der ersten thermoplastischen Polymer-Zusammensetzung.

Das Gehäuse lässt sich leicht im Spritzgussverfahren herstellen, da Gehäusewand, Halterung und Kühlkörper insgesamt einstückig vorliegen. Die Wärmeleitfähigkeit der ersten thermoplastischen Polymer-Zusammensetzung liegt vorzugsweise in einem Bereich von ≥ 0.2 W/(m K) bis ≤ 20 W/(m K), mehr bevorzugt von ≥ 0.3 W/(m K) bis ≤ 16 W/(m K) und besonders bevorzugt >_ 0.4 W/(m K) bis ≤ 8 W/(m K).

Die einstückigen Gehäuseelemente können aus dem gleichen Material gefertigt sein. Es ist aber auch möglich, verschiedene Materialien zu verwenden und diese dann stoffschlüssig miteinander zu verbinden, um das einstückige Gehäuse zu erhalten. Zur Wärmeabfuhr ist vorgesehen, dass wenigstens das Material des Kühlkörpers die vorgenannte wärmeleitende thermoplastische Polymer-Zusammensetzung umfasst.

Ein Verfahren zur Herstellung eines erfindungsgemäßen Gehäuses umfasst den Schritt des Herstellens der Gehäusewand, der Halterung und des Kühlkörpers als einstückiges Bauteil in einem Spritzgussverfahren. Auch hier können verschiedene Materialien oder aber überall das gleiche Material (die erste thermoplastische Polymer-Zusammensetzung) eingesetzt werden.

Im Hinblick auf die Fertigung können alle relevanten Teile vorzugsweise aus zwei Schüssen oder sogar nur einem Schuss hergestellt werden. Dadurch werden der Zusammenbau des Moduls und die Fertigung vereinfacht.

Ein System umfasst ein erfindungsgemäßes Gehäuse und ein Wärme abgebendes Element, welches in der Halterung des Gehäuses aufgenommen ist. Vorzugsweise ist das Wärme abgebende Element ein elektrochemischer Speicher für elektrische Energie oder eine elektrochemische Quelle von elektrischer Energie. Besonders geeignete Speicher sind Superkondensatoren/Ultrakondensatoren oder Akkumulatoren wie Lithium-Polymer-Akkumulatoren und besonders geeignete Quellen sind Brennstoffzellen wie Polymerelektrolyt-Brennstoffzellen und Direktmethanol-Brennstoffzellen.

Gemäß einer Ausführungsform ist das Polymer der ersten thermoplastischen Polymer-Zusammensetzung ausgewählt aus Polycarbonat, Polyamid, Acrylnitril-Butadien-Styrol-Copolymeren, Polyphenylensulfid, Polypropylen oder einer Mischung aus mindestens zwei der vorgenannten Polymere.

Bevorzugt ist, wenn alle an der Wärmeübertragung beteiligten Elemente aus Polycarbonatbasiertem Material bestehen. Im Vergleich zur konventionellen Kühlung kann somit eine deutliche Vergrößerung der wärmeübertragenden Oberfläche erreicht werden. Die Verwendung ähnlicher Materialien geht mit ähnlichen Wärmeausdehnungskoeffizienten an den Fügestellen einher. Dadurch kann ein direkterer Materialkontakt erfolgen, sodass die Wärmedurchgangswiderstände im Vergleich zum bekannten Stand der Technik verringert werden können. Im Hinblick auf die Langzeitstabilität ist zudem die Dimensionsgenauigkeit von Polycarbonat von Vorteil.

Bevorzugte Polycarbonate sind aromatische Polycarbonate, Polycarbonate mit mehrheitlich auf aromatische Alkohole zurückgehenden Struktureinheiten, Polyestercarbonate und Blends mit den vorgenannten Polycarbonaten als Hauptkomponente. Bevorzugte Polycarbonate haben gewichtsmittlere Molekulargewichte Mw von 22000 bis 29000 g/mol. Hierbei werden die Werte Mw durch Gelpermeationschromotographie ermittelt, kalibriert gegen Bisphenol A-Polycarbonat Standards unter Verwendung von Dichlormethan als Elutionsmittel. Die Polycarbonate werden bevorzugt durch Reaktionen von Bisphenolverbindungen mit Kohlensäureverbindungen, insbesondere Phosgen, oder beim Schmelzeumesterungsprozess mit Diphenylcarbonat oder Dimethylcarbonat dargestellt.

Hierbei sind Homopolycarbonate auf Basis von Bisphenol-A und Copolycarbonate auf der Basis der Monomere Bisphenol-A und 1,1-Bis-(4-hydroxyphenyl)-3,3,5-trimethylcyclohexan, z.B. Apec^{®} der Covestro Deutschland AG, besonders bevorzugt.

Beispiele für bevorzugte Polyamide sind PA-6,1, PA-6,T, PA-6,6, PA-6,6/6T, PA-6,6/6,T/6,1-Copolyamid, PA-6,T/2-MPMDT-Copolyamid, PA-9,T, PA-4,6 und deren Mischungen oder Copolyamide.

Gemäß einer weiteren Ausführungsform enthält die erste thermoplastische Polymer-Zusammensetzung ein Polycarbonat, das eine Schmelzvolumenrate MVR von 8 bis 20 cm³/(10 min), bestimmt nach ISO 1133-1:2012-03 (300°C, 1,2 kg) aufweist. Vorzugsweise beträgt diese MVR 15 bis 20 cm³/(10 min).

Gemäß einer weiteren Ausführungsform enthält die erste thermoplastische Polymer-Zusammensetzung einen Füllstoff aus der Gruppe Aluminiumoxid, Bornitrid, Siliziumoxid, Kaolin, Talk oder eine Mischung aus wenigstens zwei der vorgenannten Füllstoffe. Solche Füllstoffe dienen dazu, die thermische Leitfähigkeit der Polymer-Zusammensetzung zu erhöhen. Selbstverständlich kann die erste thermoplastische Polymer-Zusammensetzung weitere Additive enthalten wie Stabilisatoren, Fließverbesserer, Entformer, UV-Absorber, Flammschutzmittel und dergleichen. Solch ein Zusätze enthaltendes Polymer kann insgesamt weiterhin als "erstes thermoplastisches Polymer" angesehen werden, das heißt es wird nicht zwingend künstlich zwischen den Makromolekülen und den Zusätzen getrennt; "Polymer" und "Polymer-Zusammensetzung" hat hier die gleiche Bedeutung. Bevorzugte Kombinationen sind ein Polycarbonat mit Bornitrid, ein Polycarbonat mit Kaolin oder ein Polycarbonat mit Talk.

Das verwendete Bornitrid kann ein kubisches Bornitrid, ein hexagonales Bornitrid, ein amorphes Bornitrid, ein partiell kristallines Bornitrid, ein turbostratisches Bornitrid, ein wurtzitisches Bornitrid, ein rhomboedrisches Bornitrid und/oder eine weitere allotrope Form sein, wobei die hexagonale Form bevorzugt ist.

Bevorzugt haben die zuvor genannten thermisch leitfähigen Füllstoffe eine agglomerierten Partikelgröße (D(0,5)-Wert) von 1 µm bis 100 µm, bevorzugt von 3 µm bis 60 µm und besonders bevorzugt von 5 µm bis 30 µm, ermittelt durch Laserbeugung. Bei der Laserbeugung werden Partikelgrößenverteilungen durch Messung der Winkelabhängigkeit der Intensität von gestreutem Licht eines Laserstrahls, der eine dispergierte Partikelprobe durchdringt, ermittelt. Hierbei wird die Mie-Theorie der Lichtstreuung zur Berechnung der Partikelgrößenverteilung verwendet. Der D(0,5)-Wert bedeutet, dass 50 Vol.-% aller vorkommenden Partikel in dem untersuchten Material kleiner sind als der angegebene Wert. Wenn das erfindungsgemäße Gehäuse während seines Einsatzes durch externe Einwirkung beschädigt werden kann, beispielsweise als Gehäuse für Akkumulatoren in einem Elektrofahrzeug, erhöht eine möglichst geringe elektrische Leitfähigkeit des Materials die Sicherheit. Bei einer Zerstörung oder Verformung des Gehäuses könnten ansonsten elektrisch leitfähige Elemente des Gehäuses die Akkumulatoren kurzschließen. Gemäß einer weiteren Ausführungsform ist daher die erste thermoplastische Polymer-Zusammensetzung frei von elektrisch leitfähigen Füllstoffen. Zu vermeidende Füllstoffe sind insbesondere Ruß, Graphen, Fullerene und Kohlenstoff-Nanoröhrchen.

Gemäß einer weiteren Ausführungsform weist die erste thermoplastische Polymer-Zusammensetzung einen Elastizitätsmodul, bestimmt gemäß ISO 527-1/-2, von ≥ 2000 bis ≤ 3500 MPa (bevorzugt ≥ 2500 bis ≤ 3000 MPa) und/oder eine Izod-Schlagzähigkeit, bestimmt gemäß ISO 180/A bei 23 °C, von ≥ 5 bis ≤ 60 kJ/m² (bevorzugt ≥ 10 bis ≤ 50 kJ/m², mehr bevorzugt ≥ 20 bis ≤ 40 kJ/m²) auf. Insbesondere Polycarbonate mit solchen mechanischen Kenndaten weisen Vorteile bei Crash- oder Impactbelastungen auf. Das Material versagt bei temporären Spannungsspitzen nicht schlagartig spröde, sondern plastisch. Dieses trägt zur strukturellen Integrität des Bauteils nach Überbelastung bei. Im Gegensatz zu Werkstoffen, die sich spröde verhalten und durch Brechen versagen, deformiert sich das zähe Polycarbonat lediglich.

Die vorliegende Erfindung wird anhand der nachfolgenden Figuren weiter erläutert, ohne jedoch darauf beschränkt zu sein.
FIG. 1 zeigt ein System, dass nicht Bestandteil der Erfindung ist.
FIG. 2 zeigt ein erfindungsgemäßes System.

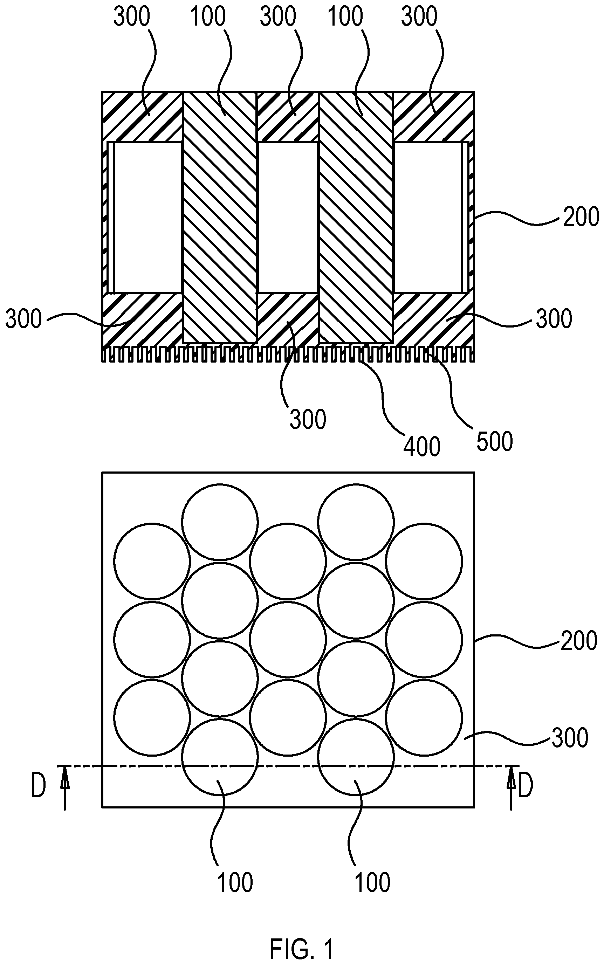

FIG. 1 zeigt schematisch ein System mit einem Gehäuse, welches Wärme abgebende Elemente 100, beispielsweise Akkumulatoren, in entsprechenden Halterungen 300 aufgenommen hat. Der untere Teil von FIG. 1 zeigt das System in Draufsicht und der obere Teil eine Schnittansicht entlang der im unteren Teil eingezeichneten Linie D-D.

Das Gehäuse weist als einstückiges Bauteil die Gehäusewand 200, eine Mehrzahl von Halterungen 300 und einen Kühlkörper 400 auf. Die Halterungen 300 umschließen die Wärme abgebenden Elemente 100 an ihren oberen und unteren Abschnitten und fixieren sie dadurch. Der Kühlkörper 400 ist auf einer der Halterungen 300 gegenüberliegenden Seite der Gehäusewand 200, im vorliegenden Fall auf der Unterseite des Gehäuses, angeordnet. Aufgrund der Einstückigkeit ist die Formulierung äquivalent, wonach die Halterungen 300 in die Gehäusewand 200 übergehen und die Gehäusewand 200 an ausgewählten Abschnitten in den Kühlkörper 400 übergeht.

Der Kühlkörper 400 weist wenigstens einen Kanal 500 für ein Kühlmedium auf. Vorzugsweise ist a) der wenigstens eine Kanal 500 für das Kühlmedium ein zur Umgebung hin offener Kanal und das Kühlmedium ist Luft. Dieses ist in FIG. 1 dargestellt. Die seitlichen Wände des Kanals 500 lassen sich somit auch als Kühlrippen beschreiben. Alternativ ist b) der wenigstens eine Kanal 500 ein geschlossener Kanal und das Kühlmedium ist eine Flüssigkeit. Auf diese Weise kann zum Beispiel eine Wasserkühlung realisiert werden.

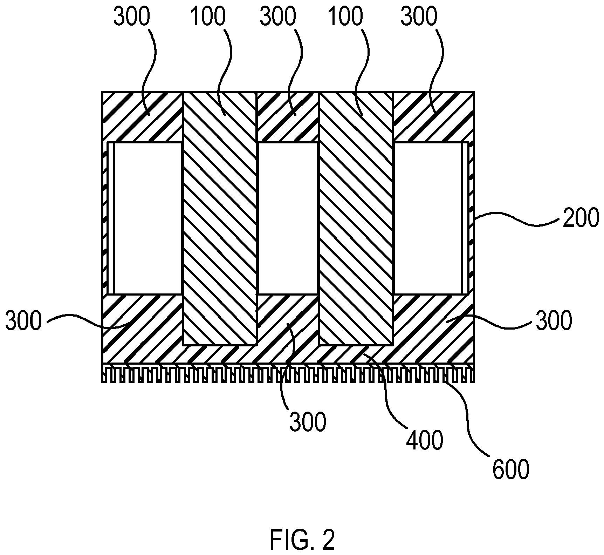

Gemäß einer weiteren, in FIG. 2 dargestellten Ausführungsform ist der Kühlkörper 400 zweiteilig, wobei er einen Teilbereich aus einer ersten thermoplastischen Zusammensetzung und einen Teilbereich aus einer zweiten thermoplastischen Zusammensetzung aufweist, wobei der Teilbereich aus der ersten thermoplastischen Zusammensetzung auf seiner der Halterung 300 abgewandten Seite planar ausgebildet und diese planare Seite ist mit einem Bereich aus einer zweiten thermoplastischen Zusammensetzung 600 stoffschlüssig verbunden.

Gemäß einer weiteren Ausführungsform umfasst das Material des Gehäuses ≥ 90 Gewichts-%, bezogen auf das Gesamtgewicht des Gehäuses, der ersten thermoplastischen Polymers. Füllstoffe und andere Polymeradditive, welche bei der Compoundierung des Polymers eingearbeitet werden oder schon eingearbeitet worden sind, werden bei diesem Gewichtsanteil bei dem Polymer mit berücksichtigt ("Polymer-Zusammensetzung"). Vorzugsweise beträgt dieser Anteil ≥ 95 Gewichts-% und mehr bevorzugt ≥ 99 Gewichts-%, bezogen auf das Gesamtgewicht des Gehäuses. Das Gehäuse lässt sich so als "Einkomponenten-Gehäuse" charakterisieren. Durch die Verwendung nur eines Materials lassen sich Fertigungsschritte einsparen.

Gemäß einer weiteren Ausführungsform umfasst das Material des Gehäuses weiterhin eine von der ersten thermoplastischen Polymer-Zusammensetzung verschiedene zweite thermoplastische Polymer-Zusammensetzung, welches an Abschnitten des Gehäuses vorliegt, an denen die erste thermoplastische Polymer-Zusammensetzung nicht vorliegt. Bezüglich der zweiten thermoplastischen Polymer-Zusammensetzung gelten grundsätzlich die gleichen Ausführungen wie zur ersten Polymer-Zusammensetzung. Vorzugsweise ist das Polymer der zweiten thermoplastischen Polymer-Zusammensetzung das gleiche wie das erste, wobei jedoch die wärmeleitenden Füllstoffe verringert oder entfernt wurden. Generell kann mit solch einem "Zweikomponenten-Gehäuse" auf fertigungstechnische Anforderungen dadurch eingegangen werden, dass an Stellen des Gehäuses, an denen es weniger auf eine gute Wärmeleitung ankommt, im Spritzgussverfahren anders fließende Thermoplasten eingesetzt werden. Die erste und die zweite thermoplastische Polymer-Zusammensetzung bilden an ihren Grenzflächen zueinander eine stoffschlüssige Verbindung.

Gemäß einer weiteren Ausführungsform ist das Polymer der zweiten thermoplastischen Polymer-Zusammensetzung ausgewählt aus Polycarbonat, Polyamid, Acrylnitril-Butadien-Styrol-Copolymeren, Polyphenylensulfid, Polypropylen oder einer Mischung aus mindestens zwei der vorgenannten Polymere. Zur Vermeidung von Wiederholungen wird auf die vorangegangenen Ausführungen im Zusammenhang mit der ersten Polymer-Zusammensetzung verwiesen.

Gemäß einer weiteren Ausführungsform enthält die zweite thermoplastische Polymer-Zusammensetzung ein Flammschutzmittel. Geeignete Flammschutzmittel sind insbesondere Phosphate wie BDP (Bisphenol A-bis(diphenylphosphat). Weitere geeignete Flammschutzmittel sind Phosphazene wie cyclische und lineare Phosphazene der Formeln (I) und (II): 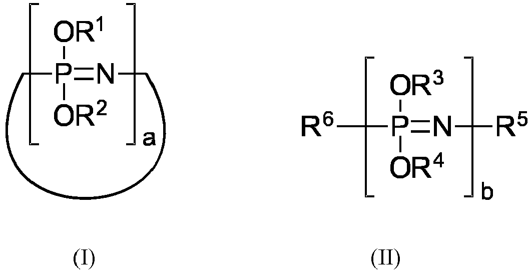 wobei R¹, R² gleich oder verschieden sind und für ein Alkyl, Cycloalkyl, Aryl oder Alkylaryl stehen, R³, R⁴ gleich oder verschieden sind und für Alkyl, Cycloalkyl, Aryl oder Alkylaryl stehen, R⁵ für -N=P(OR³)₃, -N=P(OR⁴)₃, -N=P(O)OR³oder -N=P(O)OR⁴ steht, R⁶ für -N=P(OR³)₄, -N=P(OR⁴)₄, -N=P(O)(OR³)₂ oder -N=P(O)(OR⁴)₂ steht, a für eine ganze Zahl im Bereich von 3 bis 25 steht und b für eine ganze Zahl im Bereich von 3 bis 10000 steht.

Unter den ringförmigen erfindungsgemäß einzusetzenden Phosphazenen der Formel (I) werden bevorzugt solche eingesetzt, bei denen a in Formel (I) für eine ganze Zahl im Bereich von 3 bis 8, besonders bevorzugt für eine ganze Zahl im Bereich von 3 bis 5 steht.

Von den kettenförmigen erfindungsgemäß einzusetzenden Phosphazenen der Formel (II) werden bevorzugt solche eingesetzt, bei denen b für eine ganze Zahl im Bereich von 3 bis 1000, besonders bevorzugt im Bereich von 3 bis 100, ganz besonders bevorzugt im Bereich von 3 bis 25 steht.

Insbesondere ganz besonders bevorzugt werden ringförmige Phenoxyphosphazene eingesetzt, wie sie z.B. von der Fa. Fushimi Pharmaceutical Co. Ltd, Kagawa, Japan unter der Bezeichnung Rabitle^{®} FP110 [CAS-Nr. 1203646-63-2] erhältlich sind, oder wenn a = 3, dann 2,2,4,4,6,6-Hexahydro-2,2,4,4,6,6-hexaphenoxytriazatriphosphorine [CAS Nr. 1184-10-7].

## Patentansprüche

1. Gehäuse für wenigstens ein Wärme abgebendes Element (100), umfassend:
- eine Gehäusewand (200),
- eine mit der Gehäusewand (200) verbundene Halterung (300) zur Aufnahme des wenigstens einen Wärme abgebenden Elements (100),
- einen Kühlkörper (400), welcher auf einer der Halterung (300) gegenüberliegenden Seite der Gehäusewand (200) angeordnet ist und mit der Gehäusewand (200) verbunden ist,
**dadurch gekennzeichnet, dass**
die Gehäusewand (200), die Halterung (300) und der Kühlkörper (400) insgesamt als einstückiges Bauteil vorliegen, wobei der Kühlkörper (400) wenigstens einen Kanal (500) für ein Kühlmedium aufweist, und wenigstens ein Teilbereich des Kühlkörpers (400) aus einer ersten thermoplastischen Polymer-Zusammensetzung mit einer Wärmeleitfähigkeit, bestimmt gemäß ASTM E1461-01, von ≥ 0.2 W/(m K) besteht, wobei das Material des Gehäuses weiterhin eine von der ersten thermoplastischen Polymer-Zusammensetzung verschiedene zweite thermoplastische Polymer-Zusammensetzung enthält, welche in Bereichen des Gehäuses vorliegt, in denen die erste thermoplastische Polymer-Zusammensetzung nicht vorliegt.

2. Gehäuse gemäß Anspruch 1, wobei die erste thermoplastische Polymer-Zusammensetzung ein Polymer, ausgewählt aus der Gruppe, bestehend aus Polycarbonat, Polyamid, ABS, PPS, PP oder einer Mischung aus mindestens zwei der vorgenannten Polymere, enthält.

3. Gehäuse gemäß Anspruch 2, wobei die erste thermoplastische Polymer-Zusammensetzung ein Polycarbonat enthält, das eine Schmelzvolumenrate MVR von 8 bis 20 cm³/(10 min), bestimmt nach ISO 1133-1:2012-03 (300°C, 1,2 kg) aufweist.

4. Gehäuse gemäß einem der Ansprüche 1 bis 3, wobei die erste thermoplastische Polymer-Zusammensetzung einen Füllstoff aus der Gruppe, bestehend aus Aluminiumoxid, Bornitrid, Siliziumoxid, Kaolin, Talk oder eine Mischung aus wenigstens zwei der vorgenannten Füllstoffe, enthält.

5. Gehäuse gemäß einem der Ansprüche 1 bis 4, wobei die erste thermoplastische Polymer-Zusammensetzung einen Elastizitätsmodul, bestimmt gemäß ISO 527-1/-2, von ≥ 2000 bis ≤ 3500 MPa und/oder eine Izod-Schlagzähigkeit, bestimmt gemäß ISO 180/A bei 23 °C, von ≥ 5 bis ≤ 60 kJ/m², aufweist.

6. Gehäuse gemäß einem der vorhergehenden Ansprüche, wobei a) der wenigstens eine Kanal (500) für das Kühlmedium ein zur Umgebung hin offener Kanal ist und das Kühlmedium Luft ist oder wobei b) der wenigstens eine Kanal (500) ein geschlossener Kanal ist und das Kühlmedium eine Flüssigkeit ist.

7. Gehäuse gemäß einem der Ansprüche 1 bis 6, wobei das Material des Gehäuses ≥ 90 Gewichts-%, bezogen auf das Gesamtgewicht des Gehäuses, der ersten thermoplastischen Polymer-Zusammensetzung, enthält.

8. Gehäuse gemäß einem der Ansprüche 1 bis 7, wobei die zweite thermoplastische Polymer-Zusammensetzung Polycarbonat, Polyamid, Acrylnitril-Butadien-Styrol-Copolymere, Polyphenylensulfid, Polypropylen oder einer Mischung aus mindestens zwei der vorgenannten Polymere enthält.

9. Gehäuse gemäß Anspruch 8, wobei die zweite thermoplastische Polymer-Zusammensetzung ein Flammschutzmittel enthält.

10. Gehäuse gemäß einem der vorhergehenden Ansprüche, wobei der Kühlkörper (400) eine Vielzahl von Kanälen (500) aufweist, welche durch Rippen gebildet sind.

11. Verfahren zur Herstellung eines Gehäuses gemäß einem der Ansprüche 1 bis 10, umfassend den Schritt des Herstellens der Gehäusewand (200), der Halterung (300) und des Kühlkörpers (400) als einstückiges Bauteil in einem Spritzgussverfahren.

12. System umfassend ein Gehäuse gemäß einem der Ansprüche 1 bis 10 und ein Wärme abgebendes Element, welches in der Halterung (300) des Gehäuses aufgenommen ist.

13. System gemäß Anspruch 12, wobei das Wärme abgebende Element ein elektrochemischer Speicher für elektrische Energie oder eine elektrochemische Quelle von elektrischer Energie ist.

## Claims

1. Housing for at least one heat-releasing element (100), comprising:
- a housing wall (200),
- a holder (300) which is joined to the housing wall (200) for accommodating the at least one heat-releasing element (100),
- a cooling body (400) which is arranged on a side of the housing wall (200) opposite the holder (300) and is joined to the housing wall (200),
**characterized in that**
the housing wall (200), the holder (300) and the cooling body (400) are together present as a one-piece component, wherein the cooling body (400) has at least one channel (500) for a cooling medium and at least a subregion of the cooling body (400) consists of a first thermoplastic polymer composition having a thermal conductivity determined in accordance with ASTM E1461-01 of ≥ 0.2 W/(m K), wherein the material of the housing additionally comprises a second thermoplastic polymer composition different from the first thermoplastic polymer composition, which is present in the regions of the housing in which the first thermoplastic polymer composition is not present.

2. Housing according to Claim 1, wherein the first thermoplastic polymer composition comprises a polymer selected from the group consisting of polycarbonate, polyamide, ABS, PPS, PP or a mixture of at least two of the abovementioned polymers.

3. Housing according to Claim 2, wherein the first thermoplastic polymer composition comprises a polycarbonate which has a melt volume rate MVR of from 8 to 20 cm³/(10 min), determined in accordance with ISO 1133-1:2012-03 (300°C, 1.2 kg).

4. Housing according to any of Claims 1 to 3, wherein the first thermoplastic polymer composition comprises a filler from the group consisting of aluminium oxide, boron nitride, silicon oxide, kaolin, talc or a mixture of at least two of the abovementioned fillers.

5. Housing according to any of Claims 1 to 4, wherein the first thermoplastic polymer composition has a modulus of elasticity determined in accordance with ISO 527-1/-2 of from ≥ 2000 to ≤ 3500 MPa and/or an Izod impact toughness determined in accordance with ISO 180/A at 23°C of from ≥ 5 to ≤ 60 kJ/m².

6. Housing according to any of the preceding claims, wherein a) the at least one channel (500) for the cooling medium is a channel which is open to the surroundings and the cooling medium is air or wherein b) the at least one channel (500) is a closed channel and the cooling medium is a liquid.

7. Housing according to any of Claims 1 to 6, wherein the material of the housing contains ≥ 90% by weight, based on the total weight of the housing, of the first thermoplastic polymer composition.

8. Housing according to any of Claims 1 to 7, wherein the second thermoplastic polymer composition comprises polycarbonate, polyamide, acrylonitrile-butadienestyrene copolymers, polyphenylene sulfide, polypropylene or a mixture of at least two of the abovementioned polymers.

9. Housing according to Claim 8, wherein the second thermoplastic polymer composition comprises a flame retardant.

10. Housing according to any of the preceding claims, wherein the cooling body (400) has a plurality of channels (500) which are formed by fins.

11. Process for producing a housing according to any of Claims 1 to 10, comprising the step of producing the housing wall (200), the holder (300) and the cooling body (400) as one-piece component in an injection-moulding process.

12. System comprising a housing according to any of Claims 1 to 10 and a heat-releasing element which is accommodated in the holder (300) of the housing.

13. System according to Claim 12, wherein the heat-releasing element is an electrochemical store for electrical energy or an electrochemical source of electrical energy.

## Revendications

1. Boîtier pour au moins un élément exothermique (100), comprenant :
- une paroi de boîtier (200),
- un support (300) relié à la paroi de boîtier (200), pour logement de l'au moins un élément exothermique (100),
- un corps réfrigérant (400), qui est disposé sur une face de la paroi de boîtier (200) opposée au support (300) et est relié à la paroi de boîtier (200),
**caractérisé en ce que**
la paroi de boîtier (200), le support (300) et le corps réfrigérant (400) se présentent globalement sous forme d'un composant monobloc, le corps réfrigérant (400) présentant au moins un canal (500) pour un fluide réfrigérant, et au moins une zone partielle du corps réfrigérant (400) étant constituée d'une composition polymère thermoplastique ayant une conductivité thermique, déterminée selon ASTM E1461-01, ≥ 0,2 W/(m.K), le matériau du boîtier contenant en outre au moins une seconde composition polymère thermoplastique différente de la première composition polymère thermoplastique, et qui est présente dans des zones du boîtier dans lesquelles la première composition polymère thermoplastique n'est pas présente.

2. Boîtier selon la revendication 1, la première composition polymère thermoplastique contenant un polymère choisi dans le groupe consistant en un polycarbonate, un polyamide, un ABS, un PPS, un PP ou un mélange d'au moins deux des polymères mentionnés ci-dessus.

3. Boîtier selon la revendication 2, la première composition polymère thermoplastique contenant un polycarbonate qui présente un indice de fluidité à chaud en volume MVR de 8 à 20 cm³/(10 min), déterminé selon ISO 1133-1:2012-03 (300 °C, 1,2 kg).

4. Boîtier selon l'une des revendications 1 à 3, la première composition polymère thermoplastique contenant une charge du groupe consistant en l'oxyde d'aluminium, le nitrure de bore, l'oxyde de silicium, le kaolin, le talc ou un mélange d'au moins deux des charges mentionnées ci-dessus.

5. Boîtier selon l'une des revendications 1 à 4, la première composition polymère thermoplastique présentant un module d'élasticité, déterminé selon ISO 527-1/-2, ≥ 2 000 à ≤ 3 500 MPa, et/ou une résistance au choc Izod, déterminée selon ISO 180/A à 23 °C, ≥ 5 à ≤ 60 kJ/m².

6. Boîtier selon l'une des revendications précédentes, a) l'au moins un canal (500) pour le milieu réfrigérant étant un canal ouvert vers l'extérieur et le fluide réfrigérant étant l'air, ou b) l'au moins un canal (500) étant un canal fermé et le fluide réfrigérant étant un liquide.

7. Boîtier selon l'une des revendications 1 à 6, le matériau du boîtier contenant ≥ 90 % en poids, par rapport au poids total du boîtier, de la première composition polymère thermoplastique.

8. Boîtier selon l'une des revendications 1 à 7, la deuxième composition polymère thermoplastique contenant un polycarbonate, un polyamide, des copolymères acrylonitrile-butadiène-styrène, du poly(sulfure de phénylène), un polypropylène ou un mélange d'au moins deux des polymères mentionnés ci-dessus.

9. Boîtier selon la revendication 8, la deuxième composition polymère thermoplastique contenant un matériau ignifugeant.

10. Boîtier selon l'une des revendications précédentes, le corps réfrigérant (400) présentant un grand nombre de canaux (500), qui sont formés par des nervures.

11. Procédé de fabrication d'un boîtier selon l'une des revendications 1 à 10, comprenant l'étape de fabrication de la paroi de boîtier (200), du support (300) et du corps réfrigérant (400) sous forme d'un composant monobloc dans un procédé de moulage par injection.

12. Système comprenant un boîtier selon l'une des revendications 1 à 10 et un élément exothermique, qui est logé dans le support (300) du boîtier.

13. Système selon la revendication 12, l'élément exothermique étant un accumulateur électrochimique d'énergie électrique ou une source électrochimique d'énergie électrique.
